# EUROPEAN PATENT APPLICATION

(11) **EP 3 459 993 A1**
(43) Date of publication of application: **27.03.2019**
(21) Application number: 17836596.1
(22) Date of filing: 02.06.2017
(51) Int. Cl.: C08J 5/24, B29C 70/24, B32B 5/28, D04H 1/45, D04H 3/08

(54) **FIBER-CONTAINING MATERIAL, METHOD FOR INSERTING OUT-OF-PLANE REINFORCEMENT THREADS, AND METHOD FOR PRODUCING FIBER-CONTAINING MATERIAL**

(30) Priority: 01.08.2016 JP 2016151561
(71) Applicant: Mitsubishi Heavy Industries, Ltd., Tokyo 108-8215 (JP)
(72) Inventor: MORISHIMA, Shunichi, Tokyo 108-8215 (JP); KOZASA, Toshio, Tokyo 108-8215 (JP); HATANO, Masatake, Tokyo 108-8215 (JP); KISHIMOTO, Kazuaki, Tokyo 108-8215 (JP); TAKEUCHI, Yukio, Tokyo 108-8215 (JP); YAMASHITA, Masayuki, Tokyo 108-8215 (JP); OJIKA, Hitoshi, Nagoya-shi Aichi 455-0024 (JP)
(74) Representative: Henkel, Breuer & Partner
(86) International application number: PCT/JP2017/020627
(87) International publication number: WO 2018/025489

(57) **Abstract**

Provided are: a fiber-containing material which has improved strength in an out-of-plane direction without a decrease in strength in an in-plane direction; a method for inserting out-of-plane reinforcement threads; and a method for producing the fiber-containing material. The fiber-containing material (10) contains a base material (12) and out-of-plane reinforcement threads (14). The base material (12) contains reinforcement fibers (12f) extending in a direction along a plane. The out-of-plane reinforcement threads (14) are formed in the base material (12) so as to extend in a direction intersecting the direction along the plane.

## Description

### Technical Field

The present invention relates to a fiber-containing material, a method for inserting an out-of-plane reinforcement thread, and a method for producing a fiber-containing material.

### Background Art

As a material having lightweight properties and high strength, a composite material which includes reinforcement fibers impregnated with resin is known. The composite material is used in aircraft, automobiles, ships, or the like. As the composite material, sheet-shaped materials are used in layers. There is a case where a sheet-shaped composite material becomes weak in an out-of-plane direction orthogonal to an in-plane direction in which a sheet extends. As a method of reinforcing the sheet-shaped composite material in the out-of-plane direction, a method of stitching the sheet-shaped composite material with a thread is known (refer to PTL 1).

### Citation List

### Patent Literature

[PTL 1] US Patent No. 4786541

### Summary of Invention

### Technical Problem

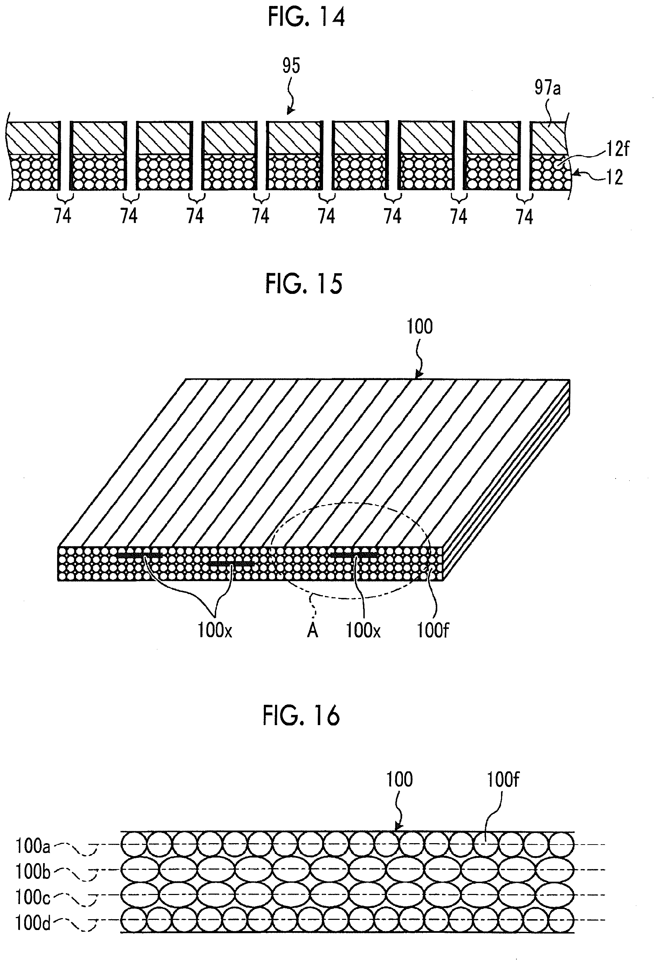

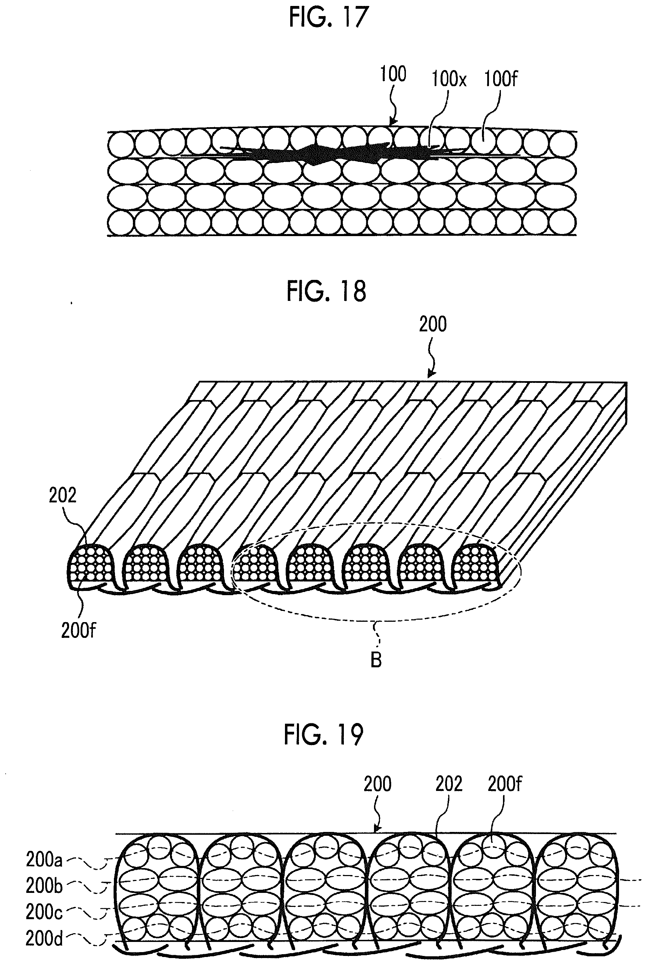

Fig. 15 is a schematic configuration diagram of a sheet-shaped composite material 100 of the related art. Fig. 16 is a schematic cross-sectional view of the sheet-shaped composite material 100 of the related art. Fig. 17 is an enlarged cross-sectional view of a region A in Fig. 15. The sheet-shaped composite material 100 is a composite material obtained by impregnating reinforcement fibers 100f with resin, as shown in Figs. 15, 16, and 17. In Figs. 15, 16, and 17, the composite material 100 in which four composite material layers are laminated is exemplified. The composite material 100 has center axes 100a, 100b, 100c, and 100d of four fiber layers, as shown in Fig. 16. The center axes 100a, 100b, 100c, and 100d of the four fiber layers extend along the in-plane direction. In the composite material 100, the strength thereof is increased by the reinforcement fibers 100f in the in-plane direction. However, the strength is not increased in the out-of-plane direction. For this reason, the composite material 100 has a problem in that there is a possibility that an interlaminar fracture part 100x may be formed between the layers, as shown in Figs. 15 and 17. In order to cope with this problem, the method described in PTL 1 is known.

Fig. 18 is a schematic configuration diagram of an improved sheet-shaped composite material 200 of the related art. Fig. 19 is an enlarged cross-sectional view of a region B in Fig. 18. The improved sheet-shaped composite material 200 of the related art is a composite material obtained by improving the sheet-shaped composite material 100 by the method in PTL 1. The composite material 200 is obtained by stitching reinforcement fibers 200f impregnated with resin together by a reinforcement thread 202, as shown in Figs. 18 and 19. In Figs. 18 and 19, the composite material 200 in which four composite material layers are laminated is exemplified. The composite material 200 has center axes 200a, 200b, 200c, and 200d of four fiber layers, as shown in Fig. 19. The center axes 200a, 200b, 200c, and 200d of the four fiber layers extend along the in-plane direction. The composite material 200 is reinforced by the reinforcement thread 202 in the out-of-plane direction. However, meandering occurs in the center axes 200a, 200b, 200c, and 200d of the four fiber layers due to the reinforcement thread 202. For this reason, the composite material 200 has a problem in that there is a possibility that the strength thereof in the in-plane direction may be lowered due to the reinforcement thread 202, as compared with the composite material 100.

The present invention has been made in view of the above and has an object to provide a fiber-containing material in which the strength thereof in an out-of-plane direction is improved without lowering the strength in an in-plane direction, a method for inserting an out-of-plane reinforcement thread, and a method for producing the fiber-containing material.

### Solution to Problem

In order to solve the above-described problem and achieve the object, according to an aspect of the present invention, there is provided a fiber-containing material including: a base material which includes reinforcement fibers extending in a direction along a plane; and an out-of-plane reinforcement thread formed in an interior of the base material so as to extend along a direction crossing the direction along the plane.

According to this configuration, the reinforcement fibers which increase the strength in the in-plane direction and the out-of-plane reinforcement thread which increases the strength in the out-of-plane direction can coexist, and therefore, it is possible to improve the strength in the out-of-plane direction without lowering the strength in the in-plane direction.

In this configuration, the out-of-plane reinforcement thread may have the same length as a thickness of the base material in the direction crossing the direction along the plane. According to this configuration, it is possible to improve the strength in the out-of-plane direction without changing the shape of the fiber-containing material.

Alternatively, in this configuration, the out-of-plane reinforcement thread may be longer than a thickness of the base material in the direction crossing the direction along the plane and protrude from the base material to at least one side in a direction of the thickness. According to this configuration, in a case where another member is bonded to the side where the out-of-plane reinforcement thread protrudes, bonding strength can be improved due to the protruding out-of-plane reinforcement thread.

In the configuration in which the out-of-plane reinforcement thread protrudes from the base material, it is preferable that the fiber-containing material further includes a protective sheet provided on a surface of the base material on the side where the out-of-plane reinforcement thread protrudes. According to this configuration, stretching of the out-of-plane reinforcement thread is suppressed and scratching of the surface of the base material and sticking of dirt to the surface of the base material can be reduced.

In the configuration in which the fiber-containing material has the protective sheet, it is preferable that the protective sheet has the same thickness as a protruding length of the out-of-plane reinforcement thread. According to this configuration, it is possible to further suppress the stretching of the out-of-plane reinforcement thread.

In these configurations, it is preferable that the base material is a composite material which includes the reinforcement fibers impregnated with resin. According to this configuration, the fiber-containing material can have even further lightweight properties and higher strength.

Further, in order to solve the above-described problem and achieve the object, according to another aspect of the present invention, there is provided a fiber-containing material including: a base material which includes reinforcement fibers extending in a direction along a plane; spacers provided on both surfaces of the base material; and a reinforcement thread stitching the base material and the spacers together, in which the reinforcement thread includes an in-plane reinforcement thread formed on a surface of each of the spacers so as to extend in the direction along the plane, and an out-of-plane reinforcement thread formed in an interior of the base material so as to extend along a direction crossing the direction along the plane.

According to this configuration, it is possible to obtain a precursor of the fiber-containing material, in which the reinforcement fibers which increase the strength in the in-plane direction and the out-of-plane reinforcement thread which increases the strength in the out-of-plane direction can coexist, that is, a precursor of the fiber-containing material, in which the strength in the out-of-plane direction is improved without lowering the strength in the in-plane direction.

Further, in order to solve the above-described problem and achieve the object, according to still another aspect of the present invention, there is provided a method for inserting an out-of-plane reinforcement thread including: a stitching step of forming a reinforcement thread which stitches a base material which includes reinforcement fibers extending a direction along a plane, and includes an in-plane reinforcement thread formed so as to extend in the direction along the plane, and an out-of-plane reinforcement thread formed in an interior of the base material so as to extend along a direction crossing the direction along the plane; and an in-plane reinforcement thread removing step of removing the in-plane reinforcement thread.

According to this configuration, since the in-plane reinforcement thread is remove, the reinforcement fibers which increase the strength in the in-plane direction and the out-of-plane reinforcement thread which increases the strength in the out-of-plane direction can coexist in the fiber-containing material, and therefore, it is possible to improve the strength in the out-of-plane direction without lowering the strength in the in-plane direction of the fiber-containing material.

In this configuration, it is preferable that the method for inserting an out-of-plane reinforcement thread further includes a spacer disposing step of providing spacers on both surfaces of the base material before the stitching step and in the stitching step, the base material and the spacers are stitched together. According to this configuration, it is possible to easily remove the in-plane reinforcement thread.

In the configuration in which the method for inserting an out-of-plane reinforcement thread further includes the spacer disposing step, it is preferable that in the in-plane reinforcement thread removing step, an area between the base material and the spacer provided on at least one surface of the base material is cut along the direction of the plane. According to this configuration, the out-of-plane reinforcement thread having the same length as the thickness of the base material in the direction crossing the direction along the plane can be inserted, and therefore, it is possible to improve the strength in the out-of-plane direction without changing the shape of the fiber-containing material.

Alternatively, in the configuration in which the method for inserting an out-of-plane reinforcement thread further includes the spacer disposing step, it is preferable that in the in-plane reinforcement thread removing step, the spacer provided on at least one surface of the base material is cut along the direction of the plane and a part of the spacer left on at least one surface of the base material serves as a protective sheet. According to this configuration, the out-of-plane reinforcement thread which is longer than the thickness of the base material in the direction crossing the direction along the plane and protrudes from the base material to at least one side in the thickness direction can be inserted, and therefore, in a case where another member is bonded to the side where the out-of-plane reinforcement thread protrudes, bonding strength can be improved due to the protruding out-of-plane reinforcement thread.

In the configuration in which in the in-plane reinforcement thread removing step, the spacer is cut along the direction of the plane, it is preferable that the method for inserting an out-of-plane reinforcement thread further includes a sheet removing step of removing the protective sheet. According to this configuration, another member can be bonded to the surface on the side where the out-of-plane reinforcement thread protrudes, of the fiber-containing material which has been protected by the protective sheet until just before the fiber-containing material is used, by the sheet removing step.

Further, in order to solve the above-described problem and achieve the object, according to still yet another aspect of the present invention, there is provided a method for producing a fiber-containing material including: producing a fiber-containing material in which an out-of-plane reinforcement thread is formed in an interior of a base material which includes reinforcement fibers, by the method for inserting an out-of-plane reinforcement thread according to any one of the above aspects.

According to this configuration, it is possible to produce the fiber-containing material in which the reinforcement fibers which increase the strength in the in-plane direction and the out-of-plane reinforcement thread which increases the strength in the out-of-plane direction coexist, and therefore, it is possible to produce the fiber-containing material in which the strength in the out-of-plane direction is improved without lowering the strength in the in-plane direction.

In this configuration, it is preferable that the method for producing a fiber-containing material further includes: an impregnating step of impregnating the reinforcement fibers with resin. According to this configuration, it is possible to produce a fiber-containing material having even further lightweight properties and higher strength.

In the configuration in which the method for producing a fiber-containing material includes the impregnating step, it is preferable that the method for producing a fiber-containing material further includes: a curing step of curing the resin after the stitching step and after the impregnating step. According to this configuration, it is possible to produce a fiber-containing material having a stable structure along with lightweight properties and high strength.

### Advantageous Effects of Invention

According to the present invention, it is possible to provide a fiber-containing material in which the strength thereof in an out-of-plane direction is improved without lowering the strength in an in-plane direction, a method for inserting an out-of-plane reinforcement thread, and a method for producing a fiber-containing material.

### Brief Description of Drawings

Fig. 1 is a schematic cross-sectional view showing an example of a fiber-containing material according to a first embodiment of the present invention.
Fig. 2 is a flowchart showing an example of processing of methods for inserting an out-of-plane reinforcement thread according to the first embodiment, a second embodiment, and a third embodiment of the present invention, which are included in methods for producing a fiber-containing material according to the first embodiment, the second embodiment, and the third embodiment of the present invention.
Fig. 3 is a schematic cross-sectional view of a base material on which spacers are disposed in the first embodiment.
Fig. 4 is a schematic cross-sectional view showing a state where the base material and the spacers are stitched together in the first embodiment.
Fig. 5 is a schematic cross-sectional view showing an example of a precursor of the fiber-containing material of Fig. 1.
Fig. 6 is a schematic cross-sectional view showing a state where in-plane reinforcement threads are removed in the first embodiment.
Fig. 7 is a schematic cross-sectional view showing an example of a fiber-containing material according to the second embodiment of the present invention.
Fig. 8 is a schematic cross-sectional view of the base material on which spacers are disposed in the second embodiment.
Fig. 9 is a schematic cross-sectional view showing an example of a precursor of the fiber-containing material of Fig. 7.
Fig. 10 is a schematic cross-sectional view showing an example of another state of the precursor of the fiber-containing material of Fig. 7.
Fig. 11 is a schematic cross-sectional view showing an example of a fiber-containing material according to the third embodiment of the present invention.
Fig. 12 is a schematic cross-sectional view of the base material on which spacers are disposed in the third embodiment.
Fig. 13 is a schematic cross-sectional view showing an example of a precursor of the fiber-containing material of Fig. 11.
Fig. 14 is a schematic cross-sectional view showing an example of another state of the precursor of the fiber-containing material of Fig. 11.
Fig. 15 is a schematic configuration diagram of a sheet-shaped composite material of the related art.
Fig. 16 is a schematic cross-sectional view of the sheet-shaped composite material of the related art.
Fig. 17 is an enlarged cross-sectional view of a region A in Fig. 15.
Fig. 18 is a schematic configuration diagram of an improved sheet-shaped composite material of the related art.
Fig. 19 is an enlarged cross-sectional view of a region B in Fig. 18.

### Description of Embodiments

Hereinafter, embodiments of the present invention will be described in detail based on the drawings. The present invention is not limited by these embodiments. Further, constituent elements which can be easily replaced by those skilled in the art, or constituent elements which are substantially identical to the constituent elements in the embodiments are included in the constituent elements in the embodiments. Further, the constituent elements described below can be appropriately combined.

### [First Embodiment]

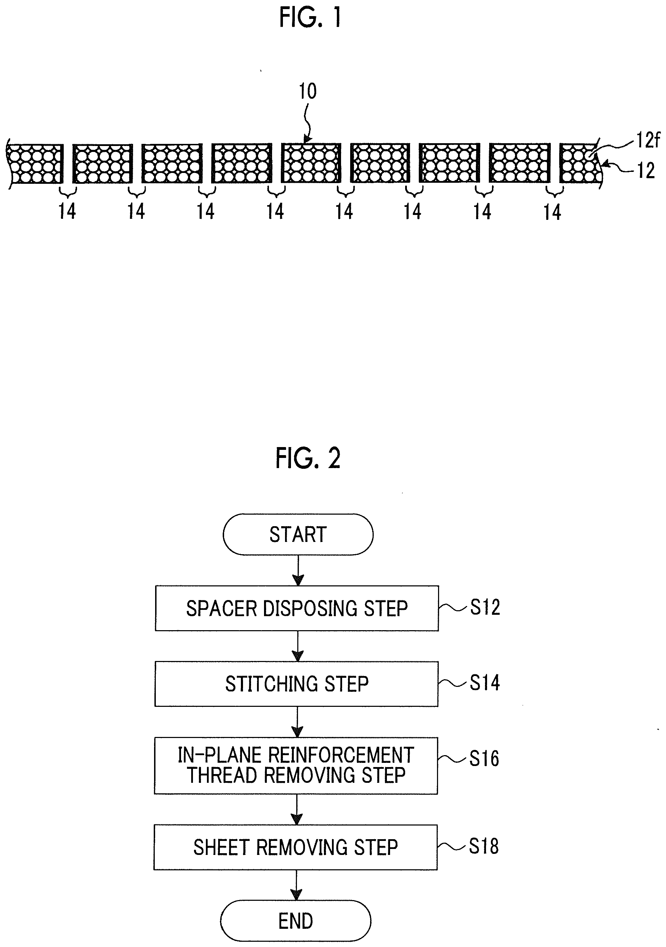

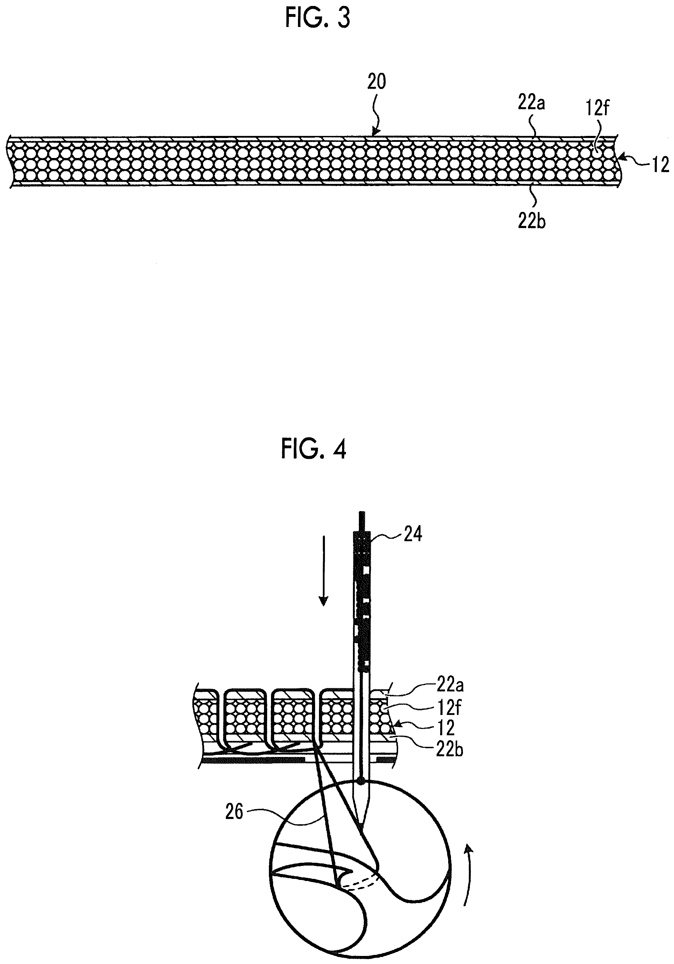

Fig. 1 is a schematic cross-sectional view showing a fiber-containing material 10 which is an example of a fiber-containing material according to a first embodiment of the present invention. Although the schematic cross-sectional view of the fiber-containing material 10 is shown in Fig. 1, the shape of the fiber-containing material 10 in a plan view as viewed in an out-of-plane direction may be any shape. The fiber-containing material 10 includes a base material 12 and out-of-plane reinforcement threads 14, as shown in Fig. 1. The base material 12 is a material extending in an in-plane direction which is a direction along the plane thereof, and includes reinforcement fibers 12f extending in the in-plane direction. The base material 12 is not limited thereto and may have a curved portion in the out-of-plane direction which is a direction crossing the direction along the plane of the base material 12, or may have a step. The out-of-plane reinforcement thread 14 is formed in the interior of the base material 12 so as to extend along the out-of-plane direction which is the direction crossing the direction along the plane of the base material 12. The out-of-plane reinforcement thread 14 has the same length as the thickness of the base material 12 in the direction crossing the direction along the plane. The out-of-plane reinforcement thread 14 is preferably orthogonal to the direction along the plane of the base material 12. It is preferable that the fiber-containing material 10 has only the out-of-plane reinforcement thread 14 crossing the direction along the plane of the base material 12 and does not have a reinforcement thread in the direction along the plane of the base material 12, that is, a direction parallel to the plane of the base material 12. In the fiber-containing material 10, in Fig. 1, the out-of-plane reinforcement threads 14 are uniformly distributed in the direction along the plane of the base material 12. However, the present invention is not limited thereto, and the out-of-plane reinforcement threads 14 may be distributed non-uniformly. In the fiber-containing material 10, for example, in a case where the base material 12 has a curved portion or a stepped portion, it is preferable that the out-of-plane reinforcement threads 14 are densely distributed at the curved portion or the stepped portion which is a place to which the stress of the base material 12 is applied. In Fig. 1, an example in which two out-of-plane reinforcement threads 14 are present in each place of the base material 12 and the two out-of-plane reinforcement threads 14 are separated from each other is shown. However, this is shown for the sake of convenience in order to describe details of the processing of the out-of-plane reinforcement thread inserting method to be performed later, and the fiber-containing material according to the present invention is not limited thereto. The same applies to Figs. 4, 5, and 6 below.

As the reinforcement fibers 12f, a bundle of several hundred to several thousand basic fibers in the range of 5 µm or more and 7 µm or less is exemplified. As the basic fiber configuring the reinforcement fiber 12f, a carbon fiber is exemplified. The basic fiber configuring the reinforcement fiber 12f is not limited thereto and may be another plastic fiber, a glass fiber, or a metal fiber.

As the base material 12, a preform which includes the reinforcement fibers 12f, and a composite material which includes the reinforcement fibers 12f impregnating with resin are exemplified. The resin to be impregnated into the reinforcement fibers 12f is preferably thermosetting resin. However, the resin may be thermoplastic resin. As the thermosetting resin, epoxy resin is exemplified. As the thermoplastic resin, polyetheretherketone (PEEK), polyetherketoneketone (PEKK), polyphenylene sulfide (PPS), or the like is exemplified. However, the resin to be impregnated into the reinforcement fibers 12f is not limited thereto and may be other resin.

In a case where the resin to be impregnated into the reinforcement fibers 12f is the thermosetting resin, the thermosetting resin can be in a softened state, a cured state, or a semi-cured state. The softened state is a state before the thermosetting resin is thermally cured. The softened state is a state where the resin does not have a self-supporting property and is a state where the shape cannot be retained in a case where the resin is not supported by a support. The softened state is a state where the thermosetting resin can undergo a thermosetting reaction by being heated. The cured state is a state after the thermosetting resin is thermally cured. The cured state is a state where the resin has a self-supporting property and is a state where the shape can be retained even in a case where the resin is not supported by a support. The cured state is a state where the thermosetting resin cannot undergo a thermosetting reaction even if it is heated. The semi-cured state is a state between the softened state and the cured state. The semi-cured state is a state where the thermosetting resin is thermally cured to the degree that is weaker than in the cured state. The semi-cured state is a state where the resin has a self-supporting property and is a state where the shape can be retained even in a case where the resin is not supported by a support. The semi-cured state is a state where the thermosetting resin can undergo a thermosetting reaction by being heated. It is preferable that the composite material which includes the reinforcement fibers 12f impregnated with the thermosetting resin is a prepreg in which the thermosetting resin is in a semi-cured state, or the thermosetting resin is in a cured state.

As the out-of-plane reinforcement thread 14, a bundle of several hundred to several thousand basic fibers in the range of 5 µm or more and 7 µm or less is exemplified. As the basic fiber configuring the out-of-plane reinforcement thread 14, a nylon fiber is exemplified. The basic fiber configuring the out-of-plane reinforcement thread 14 is not limited thereto and may be another plastic fiber, a carbon fiber, a glass fiber, or a metal fiber.

In the fiber-containing material 10, the reinforcement fibers 12f which increase the strength in the in-plane direction and the out-of-plane reinforcement threads 14 which increase the strength in the out-of-plane direction can coexist without meandering the center axes of fiber layers, and therefore, it is possible to improve the strength in the out-of-plane direction without lowering the strength in the in-plane direction.

In the fiber-containing material 10, the out-of-plane reinforcement thread 14 has the same length as the thickness of the base material 12 in the direction crossing the direction along the plane, and therefore, the strength in the out-of-plane direction is improved without changing the shape of the fiber-containing material 10.

In a case where the base material 12 is a composite material which includes the reinforcement fibers 12f impregnated with resin, the fiber-containing material 10 can have even further lightweight properties and higher strength.

The processing of the out-of-plane reinforcement thread inserting method according to the first embodiment, which is included in the method for producing the fiber-containing material according to the first embodiment, will be described below. Fig. 2 is a flowchart showing an example of the processing of the methods for inserting an out-of-plane reinforcement thread according to the first embodiment, a second embodiment, and a third embodiment of the present invention, which are included in the methods for producing a fiber-containing material according to the first embodiment, the second embodiment, and the third embodiment of the present invention. The out-of-plane reinforcement thread inserting method according to the first embodiment includes a spacer disposing step S12, a stitching step S14, an in-plane reinforcement thread removing step S16, and a sheet removing step S18, as shown in Fig. 2.

Fig. 3 is a schematic cross-sectional view of a spacer-laminated body 20 which is the base material 12 on which a spacer 22a and a spacer 22b are disposed in the first embodiment. The spacer-laminated body 20 includes the base material 12, the spacer 22a, and the spacer 22b. The spacer 22a is provided on one surface of the base material 12, that is, the upper surface in Fig. 3. The spacer 22b is provided on the other surface of the base material 12, that is, the lower surface in Fig. 3. The spacer disposing step S12 shown in Fig. 2 is a step of forming the spacer-laminated body 20 by providing the spacer 22a and the spacer 22b on both surfaces of the base material 12. The spacer disposing step S12 is performed before the stitching step S14 in order to stitch the base material 12, the spacer 22a, and the spacer 22b together in the stitching step S14 (described later).

As each of the spacer 22a and the spacer 22b, one or more laminated sheets made of nylon or polyester, one or more laminated panels having flexibility, or the like is exemplified. The spacer 22a and the spacer 22b are not limited thereto and other spacers are also acceptable. The spacer 22a and the spacer 22b can be changed in thickness by changing the number of laminated layers of the exemplified materials. The spacer 22a and the spacer 22b can suppress the scratching of the surface of the base material 12 and the sticking of dirt to the surface of the base material 12 in the stitching step S14 (described later). Further, the spacer 22a and the spacer 22b can suppress the stretching of a reinforcement thread 26 in the stitching step S14 (described later).

Fig. 4 is a schematic cross-sectional view showing a state where the base material 12, the spacer 22a, and the spacer 22b are stitched together in the first embodiment. The base material 12, the spacer 22a, and the spacer 22b are stitched together with the reinforcement thread 26 by a stitching part 24, as shown in Fig. 4. That is, the stitching part 24 stitches the base material 12, the spacer 22a, and the spacer 22b together by the reinforcement thread 26. As the stitching part 24, a needle which is mounted on a sewing machine and has a hole at the tip thereof is exemplified. However, the stitching part 24 is not limited thereto and may be another needle having a shape in which the reinforcement thread 26 can be inserted.

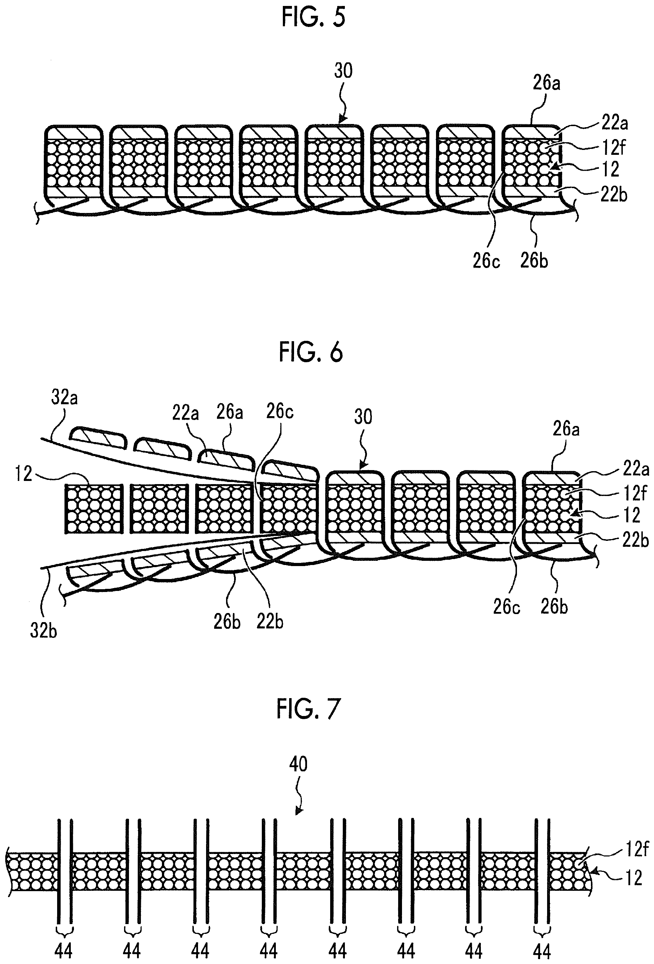

Fig. 5 is a schematic cross-sectional view showing a fiber-containing material 30 which is an example of a precursor of the fiber-containing material 10 of Fig. 1. The fiber-containing material 30 includes the base material 12, the spacer 22a, the spacer 22b, an in-plane reinforcement thread 26a, an in-plane reinforcement thread 26b, and an out-of-plane reinforcement thread 26c, as shown in Fig. 5. The reinforcement thread 26 stitching the base material 12, the spacer 22a, and the spacer 22b together includes the in-plane reinforcement thread 26a, the in-plane reinforcement thread 26b, and the out-of-plane reinforcement thread 26c. The in-plane reinforcement thread 26a is formed on the surface of the spacer 22a so as to extend in the in-plane direction which is the direction along the plane. The in-plane reinforcement thread 26b is formed on the surface of the spacer 22b so as to extend in the in-plane direction which is the direction along the plane. The out-of-plane reinforcement thread 26c is formed in the interiors of the base material 12, the spacer 22a, and the spacer 22b so as to penetrate the base material 12, the spacer 22a, and the spacer 22b and extend along the out-of-plane direction which is the direction crossing the direction along the plane.

The fiber-containing material 30 is a precursor of the fiber-containing material 10, in which the reinforcement fibers 12f which increase the strength in the in-plane direction and the out-of-plane reinforcement threads 14 which increase the strength in the out-of-plane direction can coexist without meandering the center axes of the fiber layers, and therefore, it is possible to obtain the fiber-containing material 10 in which the strength in the out-of-plane direction is improved without lowering the strength in the in-plane direction.

The stitching step S14 shown in Fig. 2 is a step of forming the reinforcement thread 26 which stitches the base material 12 which includes the reinforcement fibers 12f, and includes the in-plane reinforcement thread 26a, the in-plane reinforcement thread 26b, and the out-of-plane reinforcement thread 26c. Specifically, in the stitching step S14, the fiber-containing material 30 is formed by stitching the spacer-laminated body 20 in which the spacer 22a and the spacer 22b are laminated on the base material 12, with the reinforcement thread 26 by the stitching part 24. The spacer-laminated body 20 is subjected to the stitching step S14, thereby becoming the fiber-containing material 30. In the stitching step S14, it is preferable that the reinforcement thread 26 is soft. Further, in the stitching step S14, it is preferable that the reinforcement thread 26 is thin, that is, the number of basic fibers is smaller than that in the reinforcement fibers 12f. In these cases, the stitching step S14 can be performed smoothly. Further, in these cases, the out-of-plane reinforcement thread 14 to be inserted by the out-of-plane reinforcement thread inserting method in the first embodiment is a soft or thin thread. In the stitching step S14, the reinforcement thread 26 may be hard or thick, and in this case, there is a possibility that the reinforcement thread 26 which performs the stitching may be broken. However, since a place where the reinforcement thread 26 is broken is a place which is finally removed in the in-plane reinforcement thread removing step S16 (described later), it does not become problematic. In this case, the out-of-plane reinforcement thread 14 to be inserted by the out-of-plane reinforcement thread inserting method in the first embodiment is a hard or thick thread.

Fig. 6 is a schematic cross-sectional view showing a state where the in-plane reinforcement thread 26a and the in-plane reinforcement thread 26b are removed in the first embodiment. In the fiber-containing material 30, as shown in Fig. 6, the spacer 22a and the in-plane reinforcement thread 26a, and the spacer 22b and the in-plane reinforcement thread 26b are cut off by a cutting part 32a and a cutting part 32b, respectively. Specifically, in the fiber-containing material 30, the spacer 22a and the in-plane reinforcement thread 26a are cut off by the cutting part 32a, and the spacer 22b and the in-plane reinforcement thread 26b are cut off by the cutting part 32b. That is, the cutting part 32a cuts off the spacer 22a and the in-plane reinforcement thread 26a from the fiber-containing material 30, and the cutting part 32b cuts off the spacer 22b and the in-plane reinforcement thread 26b from the fiber-containing material 30. These are cut off, whereby the fiber-containing material 30 becomes the fiber-containing material 10. Further, these are cut off, whereby the out-of-plane reinforcement threads 26c left in the interior of the base material 12 become the out-of-plane reinforcement threads 14. Specifically, the portions left in the interior of the base material 12 through the in-plane reinforcement thread removing step S16, out of the two out-of-plane reinforcement threads 26c inserted into the same place, become a set of out-of-plane reinforcement threads 14. As both the cutting part 32a and the cutting part 32b, metal blades are exemplified. However, the cutting part 32a and the cutting part 32b are not limited thereto, and any cutting member is also acceptable as long as it can remove the spacer 22a, the spacer 22b, the in-plane reinforcement thread 26a, and the in-plane reinforcement thread 26b.

The in-plane reinforcement thread removing step S16 shown in Fig. 2 is a step of removing the in-plane reinforcement thread 26a and the in-plane reinforcement thread 26b. Specifically, the in-plane reinforcement thread removing step S16 is a step of removing the in-plane reinforcement thread 26a by cutting off the spacer 22a and the in-plane reinforcement thread 26a by cutting an area between the base material 12 and the spacer 22a along the direction of the plane by the cutting part 32a, and removing the in-plane reinforcement thread 26b by cutting off the spacer 22b and the in-plane reinforcement thread 26b by cutting an area between the base material 12 and the spacer 22b along the direction of the plane by the cutting part 32b. The fiber-containing material 30 is subjected to the in-plane reinforcement thread removing step S16, thereby becoming the fiber-containing material 10. Further, the out-of-plane reinforcement thread 26c is subjected to the in-plane reinforcement thread removing step S16, whereby the portions left in the interior of the base material 12 become the out-of-plane reinforcement threads 14.

The sheet removing step S18 shown in Fig. 2 is a step which is performed in at least one case of a case where a part of the spacer 22a is left on one surface of the base material 12 in the in-plane reinforcement thread removing step S16, and a case where a part of the spacer 22b is left on the other surface of the base material 12 in the in-plane reinforcement thread removing step S16. In these cases, the sheet removing step S18 is a step of removing at least one of a protective sheet which is a part of the remaining spacer 22a and a protective sheet which is a part of the remaining spacer 22b. In the first embodiment, in a case where the spacers 22a and the spacers 22b can be completely removed along with the removal of the in-plane reinforcement thread 26a and the in-plane reinforcement thread 26b in the in-plane reinforcement thread removing step S16, the sheet removing step S18 does not need to be performed.

In the out-of-plane reinforcement thread inserting method according to the first embodiment, the spacer disposing step S12 can be omitted. In this case, the stitching step S14 is a step of stitching only the base material 12 with the reinforcement thread 26 by the stitching part 24. Further, in this case, the in-plane reinforcement thread removing step S16 is a step of removing the in-plane reinforcement thread formed on the surface of the base material 12 so as to extend in the in-plane direction which is the direction along the plane, by treatment such as scraping-off. Further, in this case, since there is no spacer 22a and spacer 22b, the sheet removing step S18 is omitted.

In the out-of-plane reinforcement thread inserting method according to the first embodiment, the in-plane reinforcement thread is removed in the in-plane reinforcement thread removing step S16 through the intervention of a precursor which includes an in-plane reinforcement thread removable in the in-plane reinforcement thread removing step S16. In the out-of-plane reinforcement thread inserting method according to the first embodiment, in a case where the spacer disposing step S12 is not omitted, specifically, the in-plane reinforcement thread 26a and the in-plane reinforcement thread 26b are removed in the in-plane reinforcement thread removing step S16 through the intervention of the fiber-containing material 30 which is a precursor which includes the in-plane reinforcement thread 26a and the in-plane reinforcement thread 26b removable in the in-plane reinforcement thread removing step S16. For this reason, in the out-of-plane reinforcement thread inserting method according to the first embodiment, it is possible to allow the reinforcement fibers 12f which increase the strength in the in-plane direction and the out-of-plane reinforcement threads 14 which increase the strength in the out-of-plane direction to coexist in the fiber-containing material 10, and therefore, it is possible to improve the strength in the out-of-plane direction without lowering the strength in the in-plane direction of the fiber-containing material 10.

In the out-of-plane reinforcement thread inserting method according to the first embodiment, in a case where the spacer disposing step S12 is not omitted, in the stitching step S14, the spacer-laminated body 20 in which the spacer 22a and the spacer 22b are laminated on the base material 12 is stitched with the reinforcement thread 26 by the stitching part 24. For this reason, in the out-of-plane reinforcement thread inserting method according to the first embodiment, in a case where the spacer disposing step S12 is not omitted, the in-plane reinforcement thread 26a and the in-plane reinforcement thread 26b can be removed by cutting off the spacer 22a and the spacer 22b in the in-plane reinforcement thread removing step S16, and therefore, it is possible to easily perform the removal of the in-plane reinforcement thread 26a and the in-plane reinforcement thread 26b.

In the out-of-plane reinforcement thread inserting method according to the first embodiment, in the in-plane reinforcement thread removing step S16, the area between the base material 12 and the spacer 22a is cut along the direction of the plane and the area between the base material 12 and the spacer 22b is cut along the direction of the plane. For this reason, in the out-of-plane reinforcement thread inserting method according to the first embodiment, the out-of-plane reinforcement thread 14 having the same length as the thickness of the base material 12 can be inserted, and therefore, it is possible to improve the strength in the out-of-plane direction without changing the shape of the fiber-containing material 10. Further, in the out-of-plane reinforcement thread inserting method according to the first embodiment, it is possible to make the surface of the fiber-containing material 10 smooth.

The method for producing a fiber-containing material according to the first embodiment will be described below. The method for producing a fiber-containing material according to the first embodiment includes the processing of the out-of-plane reinforcement thread inserting method according to the first embodiment. For this reason, in the method for producing a fiber-containing material according to the first embodiment, specifically, it is possible to produce the fiber-containing material 10 in which the out-of-plane reinforcement threads 14 are formed in the interior of the base material 12 which includes the reinforcement fibers 12f, by the out-of-plane reinforcement thread inserting method according to the first embodiment. Therefore, in the method for producing a fiber-containing material according to the first embodiment, it is possible to produce the fiber-containing material 10 in which the strength in the out-of-plane direction is improved without lowering the strength in the in-plane direction.

The method for producing a fiber-containing material according to the first embodiment preferably includes an impregnating step of impregnating the reinforcement fibers 12f with resin. In a case where the method for producing a fiber-containing material according to the first embodiment includes the impregnating step, the fiber-containing material 10 in which the base material 12 is a composite material which includes the reinforcement fibers 12f impregnated with resin can be produced, and therefore, it is possible to produce a fiber-containing material having even further lightweight properties and higher strength. The impregnating step may be performed at any timing in the out-of-plane reinforcement thread inserting method according to the first embodiment.

In a case where the method for producing a fiber-containing material according to the first embodiment includes the impregnating step, it is preferable that the method includes a curing step of curing the resin. In a case where the method for producing a fiber-containing material according to the first embodiment includes the curing step, it is possible to produce the fiber-containing material 10 in which the base material 12 is a composite material which includes the reinforcement fibers 12f impregnated resin and the resin is in a semi-cured state or in a cured state, and therefore, it is possible to produce a fiber-containing material having a stable structure along with lightweight properties and high strength. It is preferable that the curing step is performed after the stitching step S14 and after the impregnating step, and in this case, since the stitching step S14 is performed before the resin is cured, the stitching step S14 can be performed smoothly.

### [Second Embodiment]

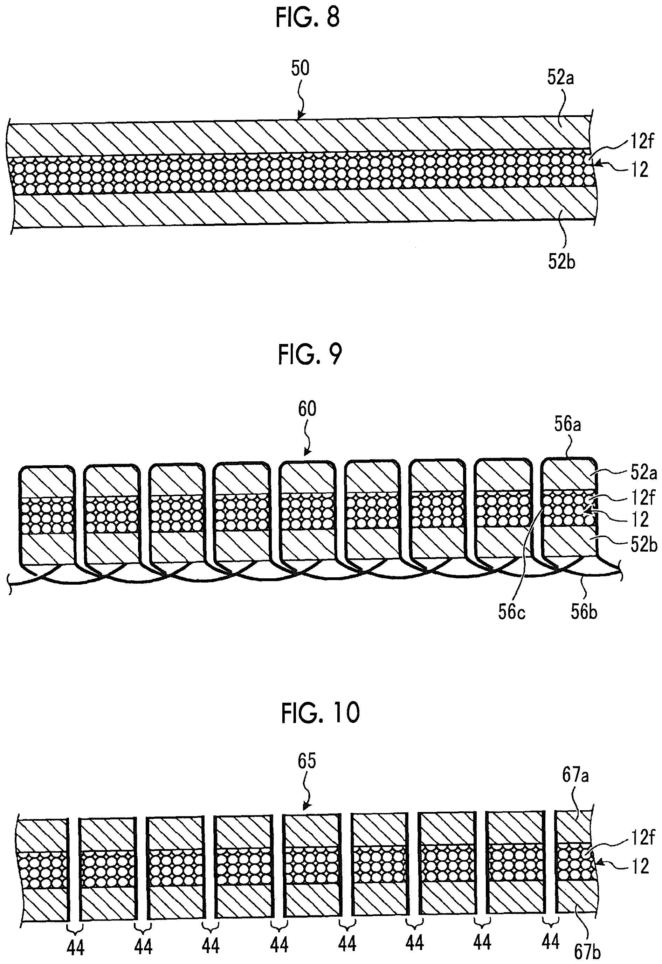

Fig. 7 is a schematic cross-sectional view showing a fiber-containing material 40 which is an example of a fiber-containing material according to the second embodiment of the present invention. The fiber-containing material 40 according to the second embodiment includes the base material 12 and out-of-plane reinforcement threads 44, as shown in Fig. 7. That is, the fiber-containing material 40 according to the second embodiment is a fiber-containing material in which in the fiber-containing material 10 according to the first embodiment, the out-of-plane reinforcement threads 14 are replaced with the out-of-plane reinforcement threads 44. In the description of the second embodiment, the same reference numeral groups as those in the first embodiment are used for the same configurations as those in the first embodiment, and detailed description thereof is omitted. In Fig. 7, similar to Fig. 1, an example in which two out-of-plane reinforcement threads 44 are present in each place of the base material 12 and the two out-of-plane reinforcement threads 44 are separated from each other is shown. However, this is shown for the sake of convenience in order to describe details of the processing of the out-of-plane reinforcement thread inserting method to be performed later, similar to Fig. 1, and the fiber-containing material according to the present invention is not limited thereto. The same applies to Figs. 9 and 10 below.

The out-of-plane reinforcement thread 44 is different from the out-of-plane reinforcement thread 14 in that the out-of-plane reinforcement thread 44 is longer than the thickness of the base material 12 in the direction crossing the direction along the plane and protrudes from the base material 12 to both sides in the thickness direction. The out-of-plane reinforcement thread 44 is the same as the out-of-plane reinforcement thread 14 in other respects except for the length and protruding from the base material 12. In the fiber-containing material 40, the out-of-plane reinforcement thread 44 has the above configuration, and therefore, in a case where other members are bonded to both surfaces from which the out-of-plane reinforcement thread 44 protrudes, bonding strength can be improved due to the protruding out-of-plane reinforcement thread 44. Specifically, in the fiber-containing material 40, the protruding out-of-plane reinforcement thread 44 serves as an out-of-plane reinforcement thread in another member which is bonded to the fiber-containing material 40, and therefore, it is possible to improve the bonding strength. Further, in the fiber-containing material 40, the protruding out-of-plane reinforcement thread 44 causes an anchor effect between the fiber-containing material 40 and another member which is bonded thereto, and therefore, it is possible to improve the bonding strength. Further, in the fiber-containing material 40, the protruding out-of-plane reinforcement thread 44 can hold an adhesive layer between the fiber-containing material 40 and another member which is bonded thereto, and therefore, it is possible to improve the bonding strength.

The processing of the out-of-plane reinforcement thread inserting method according to the second embodiment, which is included in the method for producing a fiber-containing material according to the second embodiment, will be described. In the out-of-plane reinforcement thread inserting method according to the second embodiment, all of the spacer disposing step S12, the stitching step S14, the in-plane reinforcement thread removing step S16, and the sheet removal step S18 in the out-of-plane reinforcement thread inserting method according to the second embodiment are changed as described below.

Fig. 8 is a schematic cross-sectional view of a spacer-laminated body 50 which is the base material 12 on which a spacer 52a and a spacer 52b are disposed in the second embodiment. The spacer-laminated body 50 according to the second embodiment includes the base material 12, the spacer 52a, and the spacer 52b, as shown in Fig. 8. That is, the spacer-laminated body 50 according to the second embodiment has a configuration in which in the spacer-laminated body 20 according to the first embodiment, the spacer 22a is changed to the spacer 52a and the spacer 22b is changed to the spacer 52b. The spacer 52a is different from the spacer 22a in that the thicknesses of both the spacers are different from each other, that is, the spacer 52a is thicker. The spacer 52a is the same as the spacer 22a in other respects except that the thickness thereof is different from that of the spacer 22a. The spacer 52b is different from the spacer 22b in that the thicknesses of both the spacers are different from each other, that is, the spacer 52b is thicker. The spacer 52b is the same as the spacer 22b in other respects except that the thickness thereof is different from that of the spacer 22b.

The spacer disposing step S12 in the second embodiment is different from the spacer disposing step S12 in the first embodiment in that the spacer 52a is disposed instead of the spacer 22a and the spacer 52b is disposed instead of the spacer 22b. The spacer disposing step S12 in the second embodiment is the same as the spacer disposing step S12 in the first embodiment in other respects except that the spacers to be disposed are different from each other. The spacer disposing step S12 in the second embodiment is a step of forming the spacer-laminated body 50 by providing the spacer 52a and the spacer 52b on both surfaces of the base material 12.

Fig. 9 is a schematic cross-sectional view showing a fiber-containing material 60 which is an example of a precursor of the fiber-containing material 40 of Fig. 7. The fiber-containing material 60 according to the second embodiment includes the base material 12, the spacer 52a, the spacer 52b, an in-plane reinforcement thread 56a, an in-plane reinforcement thread 56b, and an out-of-plane reinforcement thread 56c, as shown in Fig. 9. That is, the fiber-containing material 60 according to the second embodiment has a configuration in which in the fiber-containing material 30 according to the first embodiment, the spacer 22a is changed to the spacer 52a, the spacer 22b is changed to the spacer 52b, the in-plane reinforcement thread 26a is changed to the in-plane reinforcement thread 56a, the in-plane reinforcement thread 26b is changed to the in-plane reinforcement thread 56b, and the out-of-plane reinforcement thread 26c is changed to the out-of-plane reinforcement thread 56c. In the following, the in-plane reinforcement thread 56a, the in-plane reinforcement thread 56b, and the out-of-plane reinforcement thread 56c are collectively referred to appropriately as a reinforcement thread 56.

The in-plane reinforcement thread 56a is formed on the surface of the spacer 52a so as to extend in the in-plane direction which is the direction along the plane. The in-plane reinforcement thread 56b is formed on the surface of the spacer 52b so as to extend in the in-plane direction which is the direction along the plane. The out-of-plane reinforcement thread 56c is formed in the interiors of the base material 12, the spacer 52a, and the spacer 52b so as to penetrate the base material 12, the spacer 52a, and the spacer 52b and extend along the out-of-plane direction which is the direction crossing the direction along the plane. The out-of-plane reinforcement thread 56c is longer than the out-of-plane reinforcement thread 26c by an amount by which the spacer 52a and the spacer 52b are thicker than the spacer 22a and the spacer 22b.

The stitching step S14 in the second embodiment is different from the stitching step S14 in the first embodiment in that a target to be stitched is the spacer-laminated body 50 instead of the spacer-laminated body 20 and a thread to be used for stitching is the reinforcement thread 56 instead of the reinforcement thread 26. The stitching step S14 in the second embodiment is the same as the stitching step S14 in the first embodiment in other respects except that the targets to be stitched and the thread to be used for stitching are different. In the stitching step S14 in the second embodiment, the fiber-containing material 60 is formed by stitching the spacer-laminated body 50 with the reinforcement thread 56.

Fig. 10 is a schematic cross-sectional view showing a fiber-containing material 65 which is an example of another state of the precursor of the fiber-containing material 40 of Fig. 7. The fiber-containing material 65 includes the base material 12, a protective sheet 67a, a protective sheet 67b, and the out-of-plane reinforcement thread 44. The protective sheet 67a is provided on one surface of the base material 12 on the side where the out-of-plane reinforcement thread 44 protrudes, that is, on the upper surface in Fig. 10. That is, the protective sheet 67a is provided on the side where the spacer 52a is disposed with respect to the base material 12. The protective sheet 67b is provided on the other surface of the base material 12 on the side where the out-of-plane reinforcement thread 44 protrudes, that is, on the lower surface in Fig. 10. That is, the protective sheet 67b is provided on the side where the spacer 52b is disposed with respect to the base material 12.

As the protective sheet 67a and the protective sheet 67b, similar to the spacer 52a and the spacer 52b, that is, similar to the spacer 22a and the spacer 22b, one or more laminated sheets made of nylon or polyester, one or more laminated panels having flexibility, or the like is exemplified. The protective sheet 67a and the protective sheet 67b are not limited thereto, and other protective sheets may be used. The protective sheet 67a and the protective sheet 67b can be changed in thickness by changing the number of laminated layers of the materials exemplified in the spacer 52a and the spacer 52b, and by changing the cutting position in the in-plane reinforcement thread removing step S16 (described later) in the second embodiment.

The protective sheet 67a and the protective sheet 67b can suppress the scratching of the surface of the base material 12 and the sticking of dirt to the surface of the base material 12 in the fiber-containing material 65. Further, the protective sheet 67a and the protective sheet 67b can suppress the stretching of the out-of-plane reinforcement thread 44 in the fiber-containing material 65.

The protective sheet 67a has the same thickness as the protruding length of the out-of-plane reinforcement thread 44 from one surface of the base material 12. Further, the protective sheet 67b has the same thickness as the protruding length of the out-of-plane reinforcement thread 44 from the other surface of the base material 12. For this reason, both the protective sheet 67a and the protective sheet 67b can further suppress the stretching of the out-of-plane reinforcement thread 44. Further, the out-of-plane reinforcement thread 44 can be changed in length by changing the thicknesses of the protective sheet 67a and the protective sheet 67b.

The in-plane reinforcement thread removing step S16 in the second embodiment is different from the in-plane reinforcement thread removing step S16 in the first embodiment in that instead of the in-plane reinforcement thread 26a and the in-plane reinforcement thread 26b, the in-plane reinforcement thread 56a and the in-plane reinforcement thread 56b are removed. Specifically, the in-plane reinforcement thread removing step S16 in the second embodiment is different from the in-plane reinforcement thread removing step S16 in the first embodiment in that instead of cutting the area between the base material 12 and the spacer 22a, the spacer 52a is cut along the direction of the plane and a part of the spacer 52a left on one surface of the base material 12 serves as the protective sheet 67a. Further, the in-plane reinforcement thread removing step S16 in the second embodiment is different from the in-plane reinforcement thread removing step S16 in the first embodiment in that instead of cutting the area between the base material 12 and the spacer 22b, the spacer 52b is cut along the direction of the plane and a part of the spacer 52b left on one surface of the base material 12 serves as the protective sheet 67b. The in-plane reinforcement thread removing step S16 in the second embodiment is the same as the in-plane reinforcement thread removing step S16 in the first embodiment in other respects except for the above differences. The fiber-containing material 60 is subjected to the in-plane reinforcement thread removing step S16, thereby becoming the fiber-containing material 65. Further, the out-of-plane reinforcement thread 56c is subjected to the in-plane reinforcement thread removing step S16, whereby the portions left in the base material 12, the protective sheet 67a, and the protective sheet 67b become the out-of-plane reinforcement threads 44. Specifically, the portions left in the interiors of the base material 12, the protective sheet 67a, and the protective sheet 67b through the in-plane reinforcement thread removing step S16, out of the two out-of-plane reinforcement threads 56c inserted into the same place, become a set of out-of-plane reinforcement threads 44.

The sheet removing step S18 in the second embodiment is a step of removing the protective sheet 67a and the protective sheet 67b. The fiber-containing material 65 is subjected to the sheet removing step S18, thereby becoming the fiber-containing material 40.

In the out-of-plane reinforcement thread inserting method according to the second embodiment, in the in-plane reinforcement thread removing step S16, the spacer 52a is cut along the direction of the plane, so that a part of the spacer 52a left on one surface of the base material 12 serves as the protective sheet 67a, and the spacer 52b is cut along the direction of the plane, so that a part of the spacer 52b left on one surface of the base material 12 serves as the protective sheet 67b. For this reason, in the out-of-plane reinforcement thread inserting method according to the second embodiment, the out-of-plane reinforcement thread 44 which is longer than the thickness of the base material 12 in the direction crossing the direction along the plane and protrudes in the thickness direction from the base material can be inserted. Therefore, in the out-of-plane reinforcement thread inserting method according to the second embodiment, in a case where another member is bonded to the side of the fiber-containing material 40, where the out-of-plane reinforcement thread 44 protrudes, the bonding strength can be improved due to the protruding out-of-plane reinforcement thread 44. Further, in the out-of-plane reinforcement thread inserting method according to the second embodiment, the length of the out-of-plane reinforcement thread 44 which is inserted into the fiber-containing material 40 can be controlled by controlling the cutting positions of the spacer 52a and the spacer 52b in the in-plane reinforcement thread removing step S16.

In the out-of-plane reinforcement thread inserting method according to the second embodiment, in the sheet removing step S18, the protective sheet 67a and the protective sheet 67b are removed. For this reason, in the out-of-plane reinforcement thread inserting method according to the second embodiment, another member can be bonded to the surface on the side where the out-of-plane reinforcement thread protrudes, of the fiber-containing material 40 which has been protected by the protective sheet 67a and the protective sheet 67b until just before the fiber-containing material 40 is used.

The method for producing a fiber-containing material according to the second embodiment will be described below. The method for producing a fiber-containing material according to the second embodiment includes the processing of the out-of-plane reinforcement thread inserting method according to the second embodiment. For this reason, in the method for producing a fiber-containing material according to the second embodiment, specifically, it is possible to produce the fiber-containing material 40 in which the out-of-plane reinforcement threads 44 are formed in the interior of the base material 12 which includes the reinforcement fibers 12f, by the out-of-plane reinforcement thread inserting method according to the second embodiment. Therefore, in the method for producing a fiber-containing material according to the second embodiment, it is possible to produce the fiber-containing material 40 in which the strength in the out-of-plane direction is improved without lowering the strength in the in-plane direction. The impregnating step and the curing step in the method for producing a fiber-containing material according to the second embodiment are the same as the impregnating step and the curing step in the method for producing a fiber-containing material according to the first embodiment.

### [Third Embodiment]

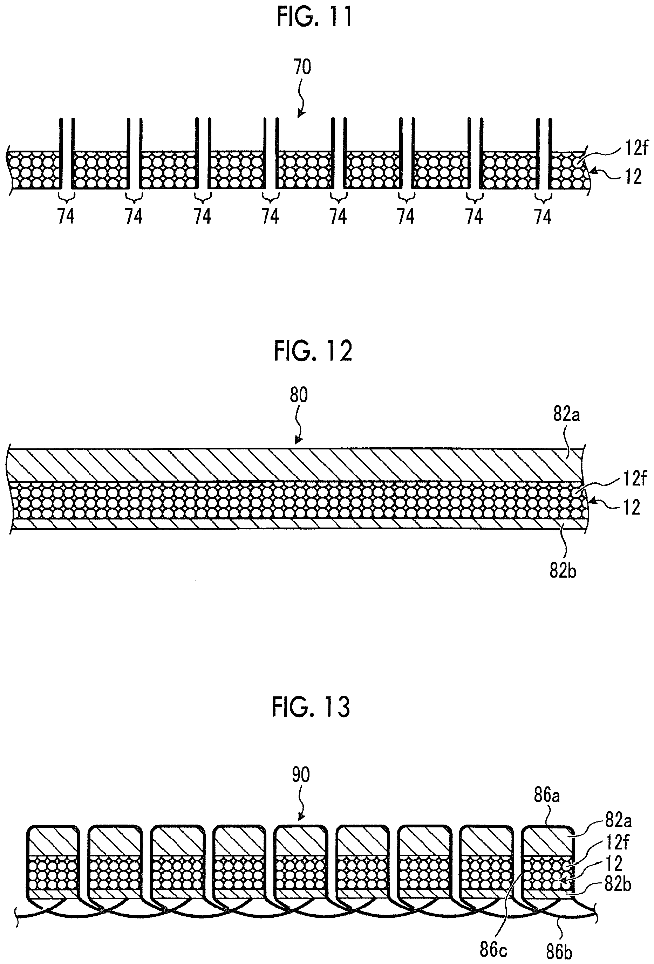

Fig. 11 is a schematic cross-sectional view showing a fiber-containing material 70 which is an example of a fiber-containing material according to the third embodiment of the present invention. The fiber-containing material 70 according to the third embodiment includes the base material 12 and out-of-plane reinforcement threads 74, as shown in Fig. 11. That is, the fiber-containing material 70 according to the third embodiment has a configuration in which in the fiber-containing material 10 according to the first embodiment, the out-of-plane reinforcement threads 14 are changed to the out-of-plane reinforcement threads 74. In the description of the third embodiment, the same reference numeral groups as those in the first embodiment are used for the same configurations as those in the first embodiment, and detailed description thereof is omitted. In Fig. 11, similar to Figs. 1 and 7, an example in which two out-of-plane reinforcement threads 74 are present in each place of the base material 12 and the two out-of-plane reinforcement threads are separated from each other is shown. However, this is shown for the sake of convenience in order to describe details of the processing of the out-of-plane reinforcement thread inserting method to be performed later, similar to Figs. 1 and 7, and the fiber-containing material according to the present invention is not limited thereto. The same applies to Figs. 13 and 14 below.

The out-of-plane reinforcement thread 74 is different from the out-of-plane reinforcement thread 14 in that the out-of-plane reinforcement thread 74 is longer than the thickness of the base material 12 in the direction crossing the direction along the plane and protrudes from the base material 12 to one surface side in the thickness direction. The out-of-plane reinforcement thread 74 is the same as the out-of-plane reinforcement thread 14 in other respects except for the length and protruding from the base material 12. That is, the out-of-plane reinforcement thread 74 does not protrude from the base material 12 to the other surface side in the thickness direction, similar to the out-of-plane reinforcement thread 14. In the fiber-containing material 70, the out-of-plane reinforcement thread 74 has the above configuration, and therefore, in a case where another member is bonded to one surface side where the out-of-plane reinforcement thread 74 protrudes, the bonding strength can be improved due to the protruding out-of-plane reinforcement thread 74. Specifically, in the fiber-containing material 70, the protruding out-of-plane reinforcement thread 74 can improve the bonding strength for the same reason as the protruding out-of-plane reinforcement thread 44 in the fiber-containing material 40 according to the second embodiment. Further, in the fiber-containing material 70, the out-of-plane reinforcement thread 74 has the above configuration, and therefore, with respect to the other surface side where the out-of-plane reinforcement thread 74 does not protrude, similar to the fiber-containing material 10, the strength in the out-of-plane direction is improved without changing the shape of the other surface side of the fiber-containing material 70, where the out-of-plane reinforcement thread 74 does not protrude.

In the fiber-containing material 10 according to the first embodiment, the out-of-plane reinforcement thread 14 does not protrude from both surfaces of the base material 12, and in the fiber-containing material 40 according to the second embodiment, the out-of-plane reinforcement thread 44 protrudes from both surfaces of the base material 12, and in the fiber-containing material 70 according to the third embodiment, the out-of-plane reinforcement thread 74 protrudes from one surface of the base material 12 and does not protrude from the other surface. The present invention is not limited thereto and includes an aspect in which in a case where the out-of-plane reinforcement thread is longer than the thickness of the base material 12 in the direction crossing the direction along the plane, the out-of-plane reinforcement thread protrudes from the base material 12 to at least one side in the thickness direction. In this case, in a case where another member is bonded to the side where the out-of-plane reinforcement thread protrudes, the bonding strength can be improved due to the protruding out-of-plane reinforcement thread.

The processing of the out-of-plane reinforcement thread inserting method according to the third embodiment, which is included in the method for producing the fiber-containing material according to the third embodiment, will be described below. In the out-of-plane reinforcement thread inserting method according to the third embodiment, any one of the spacer disposing step S12, the stitching step S14, the in-plane reinforcement thread removing step S16, and the sheet removal step S18 in the out-of-plane reinforcement thread inserting method according to the third embodiment is changed as described below.

Fig. 12 is a schematic cross-sectional view of a spacer-laminated body 80 which is the base material 12 on which a spacer 82a and a spacer 82b are disposed in the third embodiment. The spacer-laminated body 80 according to the second embodiment includes the base material 12, the spacer 82a, and the spacer 82b, as shown in Fig. 12. That is, the spacer-laminated body 80 according to the third embodiment has a configuration in which in the spacer-laminated body 20 according to the first embodiment, the spacer 22a is changed to the spacer 82a and the spacer 22b is changed to the spacer 82b. The spacer 82a is different from the spacer 22a in that the thicknesses of both the spacers are different from each other, that is, the spacer 82a is thicker. The spacer 82a is the same as the spacer 22a in other respects except that the thicknesses of both the spacers are different from each other. As the spacer 82a, the same spacer as the spacer 52a in the second embodiment is exemplified. As the spacer 82b, the space identical to the spacer 22b including the thickness as well is exemplified. However, the spacer 82b may be different from the spacer 22b.

The spacer disposing step S12 in the third embodiment is different from the spacer disposing step S12 in the first embodiment in that instead of the spacer 22a, the spacer 82a is disposed and instead of the spacer 22b, the spacer 82b is disposed. The spacer disposing step S12 in the third embodiment is the same as the spacer disposing step S12 in the first embodiment in other respects except that each spacer to be disposed is different. The spacer disposing step S12 in the third embodiment is a step of forming the spacer-laminated body 80 by providing the spacer 82a and the spacer 82b on both surfaces of the base material 12.

Fig. 13 is a schematic cross-sectional view showing a fiber-containing material 90 which is an example of a precursor of the fiber-containing material 70 of Fig. 11. The fiber-containing material 90 according to the third embodiment includes the base material 12, the spacer 82a, the spacer 82b, an in-plane reinforcement thread 86a, an in-plane reinforcement thread 86b, and an out-of-plane reinforcement thread 86c, as shown in Fig. 13. That is, the fiber-containing material 90 according to the third embodiment has a configuration in which in the fiber-containing material 30 according to the first embodiment, the spacer 22a is changed to the spacer 82a, the spacer 22b is changed to the spacer 82b, the in-plane reinforcement thread 26a is changed to the in-plane reinforcement thread 86a, the in-plane reinforcement thread 26b is changed to the in-plane reinforcement thread 86b, and the out-of-plane reinforcement thread 26c is changed to the out-of-plane reinforcement thread 86c. In the following, the in-plane reinforcement thread 86a, the in-plane reinforcement thread 86b, and the out-of-plane reinforcement thread 86c are collectively referred to appropriately as a reinforcement thread 86.

The in-plane reinforcement thread 86a is formed on the surface of the spacer 82a so as to extend in the in-plane direction which is the direction along the plane. The in-plane reinforcement thread 86b is formed on the surface of the spacer 82b so as to extend in the in-plane direction which is the direction along the plane. The out-of-plane reinforcement thread 86c is formed in the interiors of the base material 12, the spacer 82a, and the spacer 82b so as to penetrate the base material 12, the spacer 82a, and the spacer 82b and extend along the out-of-plane direction which is the direction crossing the direction along the plane. The out-of-plane reinforcement thread 86c is longer than the out-of-plane reinforcement thread 26c by an amount by which the spacer 82a is thicker than the spacer 22a.

The stitching step S14 in the third embodiment is different from the stitching step S14 in the first embodiment in that a target to be stitched is the spacer-laminated body 80 instead of the spacer-laminated body 20 and a thread to be used for stitching is the reinforcement thread 86 instead of the reinforcement thread 26. The stitching step S14 in the third embodiment is the same as the stitching step S14 in the first embodiment in other respects except that the targets to be stitched and the thread to be used for stitching are different. In the stitching step S14 in the third embodiment, the fiber-containing material 90 is formed by stitching the spacer-laminated body 80 with the reinforcement thread 86.

Fig. 14 is a schematic cross-sectional view showing a fiber-containing material 95 which is an example of another state of the precursor of the fiber-containing material 70 of Fig. 11. The fiber-containing material 95 includes the base material 12, a protective sheet 97a, and the out-of-plane reinforcement thread 74. The protective sheet 97a is provided on one surface of the base material 12 on the side where the out-of-plane reinforcement thread 74 protrudes, that is, on the upper surface in Fig. 14. That is, the protective sheet 97a is provided on the side where the spacer 82a is disposed with respect to the base material 12. As the protective sheet 97a, the same protective sheet as the protective sheet 67a in the second embodiment is exemplified. However, the protective sheet 97a may be different from the protective sheet 67a. A protective sheet is not provided on the other surface of the base material 12 on the side where the out-of-plane reinforcement thread 74 does not protrude, that is, the lower surface in Fig. 14.

The protective sheet 97a can suppress the scratching of the surface of the base material 12 and the sticking of dirt to the surface of the base material 12 in the fiber-containing material 95, similar to the protective sheet 67a and the protective sheet 67b in the second embodiment. Further, the protective sheet 97a can suppress the stretching of the out-of-plane reinforcement thread 74 in the fiber-containing material 95, similar to the protective sheet 67a and the protective sheet 67b in the second embodiment.

The protective sheet 97a has the same thickness as the protruding length of the out-of-plane reinforcement thread 74 from one surface of the base material 12, similar to the protective sheet 67a and the protective sheet 67b in the second embodiment. For this reason, the protective sheet 97a can further suppress the stretching of the out-of-plane reinforcement thread 74, similar to the protective sheet 67a and the protective sheet 67b in the second embodiment. Further, the out-of-plane reinforcement thread 74 can be changed in length by changing the thickness of the protective sheet 97a, similar to the protective sheet 67a and the protective sheet 67b in the second embodiment.

In the fiber-containing material 65 according to the second embodiment, the protective sheet 67a and the protective sheet 67b are respectively provided on both surfaces which are the sides where the out-of-plane reinforcement thread 44 protrudes from the base material 12, and in the fiber-containing material 95 according to the third embodiment, the protective sheet 97a is provided on one surface where the out-of-plane reinforcement thread 74 protrudes from the base material 12 and a protective sheet is not provided on the other surface where the out-of-plane reinforcement thread 74 does not protrude from the base material 12. The present invention is not limited thereto and includes an aspect in which in a case where the out-of-plane reinforcement thread protrudes from at least one surface of the base material 12, a protective sheet is provided on the surface of the base material 12 on the side where the out-of-plane reinforcement thread protrudes. In this case, the protective sheet can suppress the stretching of the out-of-plane reinforcement thread which is included in the fiber-containing material and can reduce the scratching of the surface of the base material 12 and the sticking of dirt to the surface of the base material 12.

The in-plane reinforcement thread removing step S16 in the third embodiment is different from the in-plane reinforcement thread removing step S16 in the first embodiment in that instead of the in-plane reinforcement thread 26a and the in-plane reinforcement thread 26b, the in-plane reinforcement thread 86a and the in-plane reinforcement thread 86b are removed. Specifically, the in-plane reinforcement thread removing step S16 in the third embodiment is different from the in-plane reinforcement thread removing step S16 in the first embodiment in that instead of cutting the area between the base material 12 and the spacer 22a, the spacer 82a is cut along the direction of the plane and a part of the spacer 82a left on one surface of the base material 12 serves as the protective sheet 97a. Further, the in-plane reinforcement thread removing step S16 in the third embodiment is different from the in-plane reinforcement thread removing step S16 in the first embodiment in that instead of cutting off the spacer 22b by cutting the area between the base material 12 and the spacer 22b, the spacer 82b is cut off by cutting the area between the base material 12 and the spacer 82b. The in-plane reinforcement thread removing step S16 in the third embodiment is the same as the in-plane reinforcement thread removing step S16 in the first embodiment in other respects except for the above differences. The fiber-containing material 90 is subjected to the in-plane reinforcement thread removing step S16, thereby becoming the fiber-containing material 95. Further, the out-of-plane reinforcement thread 86c is subjected to the in-plane reinforcement thread removing step S16, whereby the portions left in the base material 12 and the protective sheet 97a become the out-of-plane reinforcement threads 74. Specifically, the portions left in the interiors of the base material 12 and the protective sheet 97a through the in-plane reinforcement thread removing step S16, out of the two out-of-plane reinforcement threads 86c inserted into the same place, become a set of out-of-plane reinforcement threads 74.

The sheet removing step S18 in the third embodiment is a step of removing the protective sheet 97a. The fiber-containing material 95 is subjected to the sheet removing step S18, thereby becoming the fiber-containing material 70. The sheet removing step S18 in the third embodiment is a step which is performed in a case where a part of the spacer 82b is left on the other surface of the base material 12 in the in-plane reinforcement thread removing step S16, with respect to the surface of the fiber-containing material 95 on the side where a protective sheet is not provided, that is, the surface of the base material 12 on the side where the spacer 82b is provided. In the third embodiment, in a case where the spacer 82b can be completely removed along with the removal of the in-plane reinforcement thread 86b in the in-plane reinforcement thread removing step S16, the sheet removing step S18 does not need to be performed on the surface of the base material 12 on the side where the spacer 82b is provided.

In the out-of-plane reinforcement thread inserting method according to the third embodiment, in the in-plane reinforcement thread removing step S16, the spacer 82a is cut along the direction of the plane, so that a part of the spacer 82a left on one surface of the base material 12 serves as the protective sheet 97a, and the spacer 82b is cut off by cutting the area between the base material 12 and the spacer 82b. For this reason, in the out-of-plane reinforcement thread inserting method according to the third embodiment, the out-of-plane reinforcement thread 74 which is longer than the thickness of the base material 12 in the direction crossing the direction along the plane and protrudes in the thickness direction from the surface of the base material on which the spacer 82a is provided can be inserted. Therefore, in the out-of-plane reinforcement thread inserting method according to the third embodiment, in a case where another member is bonded to the side of the fiber-containing material 70, where the out-of-plane reinforcement thread 74 protrudes, the bonding strength can be improved due to the protruding out-of-plane reinforcement thread 74. Further, in the out-of-plane reinforcement thread inserting method according to the second embodiment, the length of the out-of-plane reinforcement thread 74 which is inserted into the fiber-containing material 70 can be controlled by controlling the cutting position of the spacer 82a in the in-plane reinforcement thread removing step S16.

In the out-of-plane reinforcement thread inserting method according to the third embodiment, in the sheet removing step S18, the protective sheet 97a is removed. For this reason, in the out-of-plane reinforcement thread inserting method according to the third embodiment, another member can be bonded to the surface on the side where the out-of-plane reinforcement thread 74 protrudes, of the fiber-containing material 70 which has been protected by the protective sheet 97a until just before the fiber-containing material 70 is used.

In the out-of-plane reinforcement thread inserting method according to the first embodiment, in the in-plane reinforcement thread removing step S16, each of the areas between the base material 12 and the spacer 22a and between the base material 12 and the spacer 22b is cut along the direction of the plane on the side of both surfaces of the base material 12. In the out-of-plane reinforcement thread inserting method according to the second embodiment, in the in-plane reinforcement thread removing step S16, each of the spacer 52a and the spacer 52b is cut along the direction of the plane on the side of both surfaces of the base material 12 and a part of each of the spacer 52a and the spacer 52b serves as each of the protective sheet 67a and the protective sheet 67b. In the out-of-plane reinforcement thread inserting method according to the third embodiment, in the in-plane reinforcement thread removing step S16, the area between the base material 12 and the spacer 82b is cut along the direction of the plane on one surface side of the base material 12, and the spacer 82a is cut along the direction of the plane on the other surface side of the base material 12, so that a part of the spacer 82a serves as the protective sheet 97a. The present invention is not limited thereto, and in the in-plane reinforcement thread removing step S16, a case where an area between the base material 12 and the spacer provided on at least one side of the base material 12 is cut along the direction of the plane is also included. In this case, the out-of-plane reinforcement thread having the same length as the thickness of the base material 12 in the direction crossing the direction along the plane can be inserted, and therefore, it is possible to improve the strength in the out-of-plane direction without changing the shape of the fiber-containing material. Further, the present invention is not limited thereto, and in the in-plane reinforcement thread removing step S16, a case where the spacer provided on at least one side of the base material 12 is cut along the direction of the plane and a part of the spacer left on at least one surface of the base material 12 serves as the protective sheet is also included. In this case, the out-of-plane reinforcement thread which is longer than the thickness of the base material in the direction crossing the direction along the plane and protrudes from the base material to at least one side in the thickness direction can be inserted, and therefore, in a case where another member is bonded to the side where the out-of-plane reinforcement thread protrudes, the bonding strength can be improved due to the protruded out-of-plane reinforcement thread.

The method for producing a fiber-containing material according to the third embodiment will be described below. The method for producing a fiber-containing material according to the third embodiment includes the processing of the out-of-plane reinforcement thread inserting method according to the third embodiment. For this reason, in the method for producing a fiber-containing material according to the third embodiment, specifically, it is possible to produce the fiber-containing material 70 in which the out-of-plane reinforcement threads 74 are formed in the interior of the base material 12 which includes the reinforcement fibers 12f, by the out-of-plane reinforcement thread inserting method according to the third embodiment. Therefore, in the method for producing a fiber-containing material according to the third embodiment, it is possible to produce the fiber-containing material 70 in which the strength in the out-of-plane direction is improved without lowering the strength in the in-plane direction. The impregnating step and the curing step in the method for producing a fiber-containing material according to the third embodiment are the same as the impregnating step and the curing step in the method for producing a fiber-containing material according to the first embodiment.

### Reference Signs List

10, 30, 40, 60, 65, 70, 90, 95: fiber-containing material
12: base material
12f, 100f, 200f: reinforcement fiber
14, 26c, 44, 56c, 74, 86c: out-of-plane reinforcement thread
20, 50, 80: spacer-laminated body
22a, 22b, 52a, 52b, 82a, 82b: spacer
24: stitching part
26, 56, 86, 202: reinforcement thread
26a, 26b, 56a, 56b, 86a, 86b: in-plane reinforcement thread
32a, 32b: cutting part
67a, 67b, 97a: protective sheet
100, 200: composite material
100a, 100b, 100c, 100d, 200a, 200b, 200c, 200d: center axis of fiber layer
100x: interlaminar fracture part

## Claims

1. A fiber-containing material comprising:
a base material which includes reinforcement fibers extending in a direction along a plane; and
an out-of-plane reinforcement thread formed in an interior of the base material so as to extend along a direction crossing the direction along the plane.

2. The fiber-containing material according to claim 1, wherein the out-of-plane reinforcement thread has the same length as a thickness of the base material in the direction crossing the direction along the plane.

3. The fiber-containing material according to claim 1, wherein the out-of-plane reinforcement thread is longer than a thickness of the base material in the direction crossing the direction along the plane and protrudes from the base material to at least one side in a direction of the thickness.

4. The fiber-containing material according to claim 3, further comprising:
a protective sheet provided on a surface of the base material on the side where the out-of-plane reinforcement thread protrudes.

5. The fiber-containing material according to claim 4, wherein the protective sheet has the same thickness as a protruding length of the out-of-plane reinforcement thread.

6. The fiber-containing material according to any one of claims 1 to 5, wherein the base material is a composite material which includes the reinforcement fibers impregnated with resin.

7. A fiber-containing material comprising:
a base material which includes reinforcement fibers extending in a direction along a plane;
spacers provided on both surfaces of the base material; and
a reinforcement thread stitching the base material and the spacers together,
wherein the reinforcement thread includes an in-plane reinforcement thread formed on a surface of each of the spacers so as to extend in the direction along the plane, and an out-of-plane reinforcement thread formed in an interior of the base material so as to extend along a direction crossing the direction along the plane.

8. A method for inserting an out-of-plane reinforcement thread comprising:
a stitching step of forming a reinforcement thread which stitches a base material which includes reinforcement fibers extending a direction along a plane, and includes an in-plane reinforcement thread formed so as to extend in the direction along the plane, and an out-of-plane reinforcement thread formed in an interior of the base material so as to extend along a direction crossing the direction along the plane; and
an in-plane reinforcement thread removing step of removing the in-plane reinforcement thread.

9. The method for inserting an out-of-plane reinforcement thread according to claim 8, further comprising:
a spacer disposing step of providing spacers on both surfaces of the base material before the stitching step,
wherein in the stitching step, the base material and the spacers are stitched together.

10. The method for inserting an out-of-plane reinforcement thread according to claim 9, wherein in the in-plane reinforcement thread removing step, an area between the base material and the spacer provided on at least one surface of the base material is cut along the direction of the plane.

11. The method for inserting an out-of-plane reinforcement thread according to claim 9, wherein in the in-plane reinforcement thread removing step, the spacer provided on at least one surface of the base material is cut along the direction of the plane and a part of the spacer left on at least one surface of the base material is used as a protective sheet.

12. The method for inserting an out-of-plane reinforcement thread according to claim 11, further comprising:
a sheet removing step of removing the protective sheet.

13. A method for producing a fiber-containing material comprising:
producing a fiber-containing material in which an out-of-plane reinforcement thread is formed in an interior of a base material which includes reinforcement fibers, by the method for inserting an out-of-plane reinforcement thread according to any one of claims 8 to 12.

14. The method for producing a fiber-containing material according to claim 13, further comprising:
an impregnating step of impregnating the reinforcement fibers with resin.

15. The method for producing a fiber-containing material according to claim 14, further comprising:
a curing step of curing the resin after the stitching step and after the impregnating step.

## Amended claims

### Amended claims under Art. 19.1 PCT

1. [Amended] A fiber-containing material comprising:
a base material which includes reinforcement fibers extending in a direction along a plane; and
an out-of-plane reinforcement thread formed in an interior of the base material so as to extend along a direction crossing the direction along the plane,
wherein the out-of-plane reinforcement thread is longer than a thickness of the base material in the direction crossing the direction along the plane and protrudes from the base material to at least one side in a direction of the thickness to serve as an out-of-plane reinforcement thread in another member to be bonded.

2. [Cancelled]

3. [Cancelled]

4. [Amended] The fiber-containing material according to claim 1, further comprising:
a protective sheet provided on a surface of the base material on the side where the out-of-plane reinforcement thread protrudes.

5. The fiber-containing material according to claim 4, wherein the protective sheet has the same thickness as a protruding length of the out-of-plane reinforcement thread.

6. [Amended] The fiber-containing material according to any one of claims 1, 4, and 5, wherein the base material is a composite material which includes the reinforcement fibers impregnated with resin.

7. [Cancelled]

8. [Amended] A method for inserting an out-of-plane reinforcement thread comprising:
a spacer disposing step of providing spacers on both surfaces of a base material which includes reinforcement fibers extending a direction along a plane;
a stitching step of forming a reinforcement thread which stitches the base material and the spacers together and includes an in-plane reinforcement thread formed so as to extend in the direction along the plane, and an out-of-plane reinforcement thread which is formed in an interior of the base material so as to extend along a direction crossing the direction along the plane; and
an in-plane reinforcement thread removing step of removing the in-plane reinforcement thread by cutting an area between the base material and the spacer provided on at least one surface of the base material along the direction of the plane.

9. [Cancelled]

10. [Cancelled]

11. [Amended] A method for inserting an out-of-plane reinforcement thread comprising:
a spacer disposing step of providing spacers on both surfaces of a base material which includes reinforcement fibers extending a direction along a plane;
a stitching step of forming a reinforcement thread which stitches the base material and the spacers together and includes an in-plane reinforcement thread formed so as to extend in the direction along the plane, and an out-of-plane reinforcement thread which is formed in an interior of the base material so as to extend along a direction crossing the direction along the plane; and
an in-plane reinforcement thread removing step of removing the in-plane reinforcement thread by cutting the spacer provided on at least one surface of the base material along the direction of the plane to allow a part of the spacer left on at least one surface of the base material to serve as a protective sheet.

12. The method for inserting an out-of-plane reinforcement thread according to claim 11, further comprising:
a sheet removing step of removing the protective sheet.

13. [Amended] A method for producing a fiber-containing material comprising:
producing a fiber-containing material in which an out-of-plane reinforcement thread is formed in an interior of a base material which includes reinforcement fibers, by the method for inserting an out-of-plane reinforcement thread according to any one of claims 8, 11, and 12.

14. The method for producing a fiber-containing material according to claim 13, further comprising:
an impregnating step of impregnating the reinforcement fibers with resin.

15. The method for producing a fiber-containing material according to claim 14, further comprising:
a curing step of curing the resin after the stitching step and after the impregnating step.

16. [New] The fiber-containing material according to any one of claims 1, and 4 to 6, wherein in a case where the base material has a curved portion or a stepped portion, the out-of-plane reinforcement thread is densely distributed in the curved portion or the stepped portion as compared with other portions of the base material.

Statement under Art. 19.1 PCT
Claim 1 was limited based on original Claim 2, original Claim 3, Paragraph 0055 of the specification, and Figs. 7 and 11. Claim 2 and Claim 3 were cancelled. In Claim 4, the cited claim was amended. Claim 5 was not amended. In Claim 6, the cited claims were amended. Claim 7 was cancelled. Claim 8 was limited based on original Claim 8, original Claim 9, and original Claim 10. Claim 9 and Claim 10 were cancelled. Claim 11 was limited based on original Claim 8 and original Claim 9. Claim 12 was not amended. In Claim 13, the cited claims were amended. Claim 14 and Claim 15 were not amended. Claim 16 is a claim newly added based on Paragraph 0029 of the specification.
